(19) Europäisches Patentamt
European Patent Office
Office européen des brevets

(11) **EP 2 226 593 A1**

(12) **EUROPEAN PATENT APPLICATION**
published in accordance with Art. 153(4) EPC

(43) Date of publication:
**08.09.2010 Bulletin 2010/36**

(51) Int Cl.:
*F25B 1/00* (2006.01)    *F25B 41/06* (2006.01)

(21) Application number: **08853467.2**

(22) Date of filing: **12.11.2008**

(86) International application number:
**PCT/JP2008/003300**

(87) International publication number:
**WO 2009/069256 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007 JP 2007311271**

(71) Applicant: **Daikin Industries, Ltd.**
**Osaka 530-8323 (JP)**

(72) Inventors:
• **KAWAKATSU, Noriyasu**
**Sakai-shi**
**Osaka 591-8511 (JP)**

• **TAKAOKA, Hisaaki**
**Sakai-shi**
**Osaka 591-8511 (JP)**
• **KURIYAMA, Hideaki**
**Sakai-shi**
**Osaka 591-8511 (JP)**
• **TANAKA, Shigeto**
**Sakai-shi**
**Osaka 591-8511 (JP)**

(74) Representative: **HOFFMANN EITLE**
**Patent- und Rechtsanwälte**
**Arabellastrasse 4**
**81925 München (DE)**

(54) **FREEZER**

(57) A refrigeration apparatus (10) includes: a valve control means (33) configured to control the opening of an expansion valve (13); and opening degree detection means (32, 34) configured to perform, after a pump-down operation in which a compressor (11) is driven with the expansion valve (13) closed, an opening degree detection operation of detecting an opening degree that is an opening command value for use in changing the expansion valve (13) from a closed state to an open state, by determining whether the expansion valve (13) is open based on a change in state of low-pressure refrigerant between the expansion valve (13) and the suction side of the compressor (11), while gradually increasing the opening command value output to the expansion valve (13) with the compressor (11) deactivated. The valve control means (33) controls the expansion valve (13) using the opening degree detected in the opening degree detection operation.

FIG. 1

**Description**

TECHNICAL FIELD

This invention relates to refrigeration apparatuses including a refrigerant circuit provided with an expansion valve variable in opening.

BACKGROUND ART

Refrigeration apparatuses are conventionally known that include a refrigerant circuit provided with an expansion valve variable in opening. Patent Document 1 discloses an air conditioner as a refrigeration apparatus of this kind. The air conditioner includes a superheat controller. During heating operation, a control section of the superheat controller calculates the difference between the temperature at the entrance of an outdoor heat exchanger and the temperature at the exit thereof as a degree of superheat at the exit thereof, and further calculates the difference between the calculated degree of superheat and a desired degree of superheat as a deviation E. A valve control section of the superheat controller controls the opening of the motor-operated expansion valve to bring the deviation E to zero.
Patent Document 1: Published Japanese Patent Application No. H07-225058

DISCLOSURE OF THE INVENTION

PROBLEM TO BE SOLVED BY THE INVENTION

Such variable-opening expansion valves for use in refrigeration apparatuses of this kind have individual differences in opening. Therefore, even if the expansion valves input the same opening command value, variations occur in the actual opening. For this reason, in such a conventional refrigeration apparatus using a variable-opening expansion valve, the actual opening of the expansion valve deviates from a control target opening to which a valve control means intends to set the expansion valve by outputting an opening command value to the expansion valve. In this case, there arises a problem that an appropriate flow control cannot be carried out.
The present invention has been made in view of the foregoing points and, therefore, an object thereof is that the refrigeration apparatus including a refrigerant circuit provided with an expansion valve variable in opening provides an appropriate flow control using the expansion valve.

MEANS TO SOLVE THE PROBLEM

A first aspect of the invention is directed to a refrigeration apparatus (10) including a refrigerant circuit (20) provided with a compressor (11) and an expansion valve (13) variable in opening, the refrigerant circuit (20) being operable in a refrigeration cycle, and a valve control means (33) configured to control the opening of the expansion valve (13). The refrigeration apparatus (10) further includes opening degree detection means (32, 34) configured to perform, after a pump-down operation in which the compressor (11) is driven with the expansion valve (13) closed, an opening degree detection operation of detecting an opening degree that is an opening command value for use in changing the expansion valve (13) from a closed state to an open state, by determining whether the expansion valve (13) is open based on a change in state of low-pressure refrigerant between the expansion valve (13) and the suction side of the compressor (11), while gradually increasing the opening command value output to the expansion valve (13) with the compressor (11) deactivated, and the valve control means (33) is configured to control the expansion valve (13) using the opening degree detected in the opening degree detection operation.
A second aspect of the invention is the refrigeration apparatus according to the first aspect of the invention, wherein the opening degree detection means (32, 34) is configured to adjust, in the pump-down operation, the high-side pressure of the refrigeration cycle within a fixed range.
A third aspect of the invention is the refrigeration apparatus according to the first or second aspect of the invention, wherein the refrigeration apparatus is configured to perform, prior to the pump-down operation, a warming-up operation in which the opening degree detection means (32, 34) adjusts the high-side pressure of the refrigeration cycle within a fixed range while the compressor (11) is driven with the expansion valve (13) open.
A fourth aspect of the invention is the refrigeration apparatus according to any one of the first to third aspects of the invention, wherein the opening degree detection means (32, 34) is configured to detect as the opening degree an opening command value determined when the pressure of the low-pressure refrigerant exceeds a predetermined low-side pressure threshold value.
A fifth aspect of the invention is the refrigeration apparatus according to the fourth aspect of the invention, wherein when the opening command value reaches a predetermined upper limit, the opening degree detection means (32, 34) detects the upper limit as the opening degree even if the pressure of the low-pressure refrigerant is the low-side pressure threshold value or below.

A sixth aspect of the invention is the refrigeration apparatus according to any one of the first to fifth aspects of the invention, wherein the opening degree detection means (32, 34) is configured to detect, in the opening degree detection operation, the opening degree by repeating a first operation of increasing the opening command value by a preset value and a second operation of determining whether the expansion valve (13) is open based on a change in state of the low-pressure refrigerant between the expansion valve (13) and the suction side of the compressor (11) in this order until it is detected in the second operation that the expansion valve (13) is open.

A seventh aspect of the invention is the refrigeration apparatus according to any one of the first to sixth aspects of the invention, wherein the valve control means (33) is configured to determine the opening command value within a range not less than a lower limit command value previously set in the valve control means (33), and the opening degree detection means (32, 34) is configured to correct the lower limit command value using the opening degree.

An eighth aspect of the invention is the refrigeration apparatus according to the seventh aspect of the invention, wherein the opening degree detection means (32, 34) is configured to set an assumed value of the opening degree, calculate as a correction value a value obtained by subtracting the assumed value from the opening degree, and calculate a corrected lower limit command value by adding the correction value to the lower limit command value previously set in the valve control means (33).

A ninth aspect of the invention is the refrigeration apparatus according to the seventh or eighth aspect of the invention, wherein the opening degree detection means (32, 34) is configured to correct again the lower limit command value, which has been corrected using the opening degree, if a predetermined criterion relating to the amount of refrigerant flow through the expansion valve (13) is satisfied in a lower-limit-controlled state in which, during a normal operation in which a space to be controlled is controlled in temperature, the opening command value is equal to the lower limit command value.

A tenth aspect of the invention is the refrigeration apparatus according to the ninth aspect of the invention, wherein the opening degree detection means (32, 34) is configured to correct again the lower limit command value, which has been corrected using the opening degree, to a larger value, if a first condition in which the refrigerant flow through the expansion valve (13) is in a predetermined excessively small amount state is satisfied as the criterion in the lower-limit-controlled state.

An eleventh aspect of the invention is the refrigeration apparatus according to the ninth or tenth aspect of the invention, wherein the opening degree detection means (32, 34) is configured to correct again the lower limit command value, which has been corrected using the opening degree, to a smaller value, if a second condition in which the refrigerant flow through the expansion valve (13) is in a predetermined excessively large amount state is satisfied as the criterion in the lower-limit-controlled state.

A twelfth aspect of the invention is the refrigeration apparatus according to any one of the first to eleventh aspects of the invention, wherein the opening degree detection means (32, 34) is configured to perform the opening degree detection operation at startup of the refrigeration apparatus (10) only if a predetermined condition is satisfied.

A thirteenth aspect of the invention is the refrigeration apparatus according to the ninth aspect of the invention, wherein the opening degree detection means (32, 34) is configured to perform the opening degree detection operation at startup of the refrigeration apparatus (10) only if a predetermined condition is satisfied, and the opening degree detection means (32, 34) comprises a memory part (35) for storing as a correction value the difference between the lower limit command value previously set in the valve control means (33) and the corrected lower limit command value and is configured to correct the lower limit command value using the correction value stored in the memory part (35) if not performing the opening degree detection operation at startup of the refrigeration apparatus (10).

- OPERATIONS -

In the first aspect of the invention, the opening degree detection means (32, 34) performs an opening degree detection operation of detecting an opening degree that is an opening command value for use in changing the expansion valve (13) from a closed state to an open state. The opening degree detection operation is performed after the pump-down operation in which the compressor (11) is driven with the expansion valve (13) closed. The opening degree detection means (32, 34) determines whether the expansion valve (13) is open based on a change in state of low-pressure refrigerant between the expansion valve (13) and the suction side of the compressor (11), while gradually increasing, with the compressor (11) deactivated, the opening command value output to the expansion valve (13) from a state in which almost no refrigerant exists between the expansion valve (13) and the suction side of the compressor (11). Then, when the expansion valve (13) changes from closed to open state, the state (for example, pressure or temperature) of the low-pressure refrigerant changes. Therefore, the opening degree detection means (32, 34) detects the opening degree based on the change in state of the low-pressure refrigerant. In the first aspect of the invention, the opening degree varying among expansion valves (13) is detected. According to this opening degree, an opening characteristic of the expansion valve (13), such as a difference between the actual opening and the control target opening, can be seen. Therefore, by controlling the expansion valve (13) using the opening degree, the opening characteristic of the expansion valve (13) is reflected in the control on the expansion valve (13).

In the second aspect of the invention, in the pump-down operation, the high-side pressure of the refrigeration cycle is adjusted within a fixed range. Therefore, in performing the opening degree detection operation, the high-side pressure of the refrigeration cycle is constant.

In the third aspect of the invention, a warming-up operation is performed prior to the pump-down operation. In the warming-up operation, the opening degree detection means (32, 34) adjusts the high-side pressure of the refrigeration cycle within a fixed range. Therefore, in performing the opening degree detection operation, the high-side pressure of the refrigeration cycle is constant.

In the fourth aspect of the invention, an opening command value determined when the pressure of the low-pressure refrigerant exceeds a predetermined low-side pressure threshold value is detected as the opening degree. When the expansion valve (13) changes from closed to open state, the pressure of low-pressure refrigerant increases and the temperature thereof decreases. The pressure of the low-pressure refrigerant changes faster than the temperature thereof. In the fourth aspect of the invention, the value of pressure changing faster than temperature is used to detect the opening degree.

In the fifth aspect of the invention, when the opening degree detection means (32, 34) gradually increases the opening command value and then the opening command value reaches its upper limit, the opening degree detection means (32, 34) detects the upper limit as the opening degree. When the opening command value reaches the upper limit, the opening degree detection means (32, 34) detects the upper limit as the opening degree regardless of the state of the low-pressure refrigerant.

In the sixth aspect of the invention, in the opening degree detection operation, the opening degree detection means (32, 34) performs a first operation and a second operation in this order. In the first operation, the opening command value is increased by a preset value. In the second operation, whether the expansion valve (13) is open is determined based on the state of the low-pressure refrigerant. The opening degree detection means (32, 34) repeats the first operation and the second operation in this order until it is detected in the second operation that the expansion valve (13) is open.

In the seventh aspect of the invention, the lower limit command value, which is the lower limit of the opening command value, is corrected using the opening degree. According to this opening degree, as described previously, an opening characteristic of the expansion valve (13), such as a difference between the actual opening and the control target opening, can be seen. Therefore, by correcting the lower limit command value using the opening degree, the opening characteristic of the expansion valve (13) is reflected in the lower limit command value.

In the eighth aspect of the invention, a correction value for use in correcting the lower limit command value is calculated by subtracting an assumed value of the opening degree from the opening degree. Then, a corrected lower limit command value is calculated by adding the correction value to the current lower limit command value.

In the ninth aspect of the invention, the lower limit command value corrected using the opening degree is corrected again if a predetermined criterion relating to the amount of refrigerant flow through the expansion valve (13) is satisfied in a lower-limit-controlled state in which, during a normal operation, the opening command value is equal to the lower limit command value. In other words, first, from the amount of refrigerant that actually flows through the expansion valve (13) in the lower-limit-controlled state, determination is made of whether the lower limit command value corrected using the opening degree is an appropriate value. Then, if needed to be corrected, the lower limit command value is corrected again.

In the tenth aspect of the invention, the lower limit command value corrected using the opening degree is corrected again to a larger value, if a first condition in which the refrigerant flow through the expansion valve (13) is in a predetermined excessively small amount state is satisfied in the lower-limit-controlled state. In other words, if the amount of refrigerant that actually flows through the expansion valve (13) in the lower-limit-controlled state is determined to be smaller than an appropriate control target amount of refrigerant flow, the lower limit command value is corrected to a larger value than the lower limit command value corrected using the opening degree.

In the eleventh aspect of the invention, the lower limit command value corrected using the opening degree is corrected again to a smaller value, if a second condition in which the refrigerant flow through the expansion valve (13) is in a predetermined excessively large amount state is satisfied in the lower-limit-controlled state. In other words, if the amount of refrigerant that actually flows through the expansion valve (13) in the lower-limit-controlled state is determined to be larger than the appropriate control target amount of refrigerant flow, the lower limit command value is corrected to a smaller value than the lower limit command value corrected using the opening degree.

In the twelfth aspect of the invention, if a predetermined condition is satisfied at startup of the refrigeration apparatus (10), the opening degree detection operation is performed. If the predetermined condition is not satisfied at startup of the refrigeration apparatus (10), the opening degree detection operation is skipped.

In the thirteenth aspect of the invention, the difference between the lower limit command value previously set in the valve control means (33) and the corrected lower limit command value is stored as a correction value into the memory part (35). If the opening degree detection operation is not performed at startup of the refrigeration apparatus (10), the lower limit command value is corrected using the correction value stored in the memory part (35).

EFFECTS OF THE INVENTION

According to the present invention, since an opening degree, which is an opening command value for use in changing the expansion valve (13) from closed to open state, is detected and the expansion valve (13) is controlled using the detected opening degree, an opening characteristic of the expansion valve (13) is reflected in the control on the expansion valve (13). In other words, the control on individual expansion valves (13) is carried out in consideration of differences between individual expansion valves (13). Therefore, differences between individual expansion valves (13) are reflected in the amount of refrigerant flow through individual expansion valves (13), whereby the flow control using each expansion valve (13) can be optimized.

According to the second and third aspects of the invention, in performing the opening degree detection operation, the high-side pressure of the refrigeration cycle is constant. If the high-side pressure of the refrigeration cycle were not adjusted prior to the opening degree detection operation, the high-side pressure during the opening degree detection operation would change according to the operating conditions, such as the temperature of air fed to the condenser, and the refrigerant pressure acting on the expansion valve (13) also would change according to the operating conditions. Therefore, the degree of change in state of low-pressure refrigerant upon change of the expansion valve (13) to the open state would vary depending upon the operating conditions, which would make it difficult to accurately detect the opening degree. In contrast, in the second and third aspects of the invention, since the high-side pressure of the refrigeration cycle is constant in performing the opening degree detection operation, the refrigerant pressure acting on the expansion valve (13) is constant independent of the operating conditions. Therefore, the degree of change in state of low-pressure refrigerant upon change of the expansion valve (13) to the open state is not dependent upon the operating conditions but constant, which provides an accurate detection of the opening degree.

In the fourth aspect of the invention, the value of pressure changing faster than temperature is used to detect the opening degree. Therefore, the opening degree detection operation can be completed within a relatively short time.

According to the seventh aspect of the invention, since the opening degree detection means (32, 34) corrects the lower limit command value using the opening degree, an opening characteristic of the expansion valve (13) is reflected in the lower limit command value. If the opening of the expansion valve (13) of a conventional refrigeration apparatus (10) without correction of the lower limit command value is shifted, for example, to a wider position with respect to an input opening command value, the following problem may occur. When the degree of superheat of refrigerant sucked in the compressor (11) is decreased, even if the expansion valve (13) is throttled to an extent that the opening command value reaches the lower limit, the actual opening of the expansion valve (13) does not reach an expected control target opening. In this case, the amount of refrigerant flow through the expansion valve (13) becomes larger than the appropriate amount of refrigerant flow and, therefore, the phenomenon that the refrigerant sucked in the compressor (11) falls into a wet state may not be eliminated. Unlike this, in the seventh aspect of the invention, the opening characteristic of the expansion valve (13) is reflected in the lower limit command value and the lower limit command value is a value for which differences between individual expansion valves (13) are taken into consideration. Therefore, when the degree of superheat of refrigerant sucked in the compressor (11) decreases, the expansion valve (13) can be throttled down to the expected control target opening or an opening near to this. This prevents that the amount of refrigerant flow through the expansion valve (13) becomes larger than the appropriate amount of refrigerant flow. Hence, it can be prevented that the refrigerant sucked in the compressor (11) falls into a wet state because the expansion valve (13) cannot be throttled to the expected opening.

According to the ninth aspect of the invention, first, from the amount of refrigerant that actually flows through the expansion valve (13) in the lower-limit-controlled state, determination is made of whether the lower limit command value corrected using the opening degree is an appropriate value. Then, if needed to be corrected, the lower limit command value is corrected again. Therefore, the lower limit command value corrected using the opening degree can be corrected to a more appropriate value, whereby the flow control using the expansion valve (13) in the lower-limit-controlled state can be further optimized.

According to the tenth aspect of the invention, if the amount of refrigerant that actually flows through the expansion valve (13) in the lower-limit-controlled state is determined to be smaller than the appropriate control target amount of refrigerant flow, the lower limit command value is corrected to a larger value than the lower limit command value corrected using the opening degree. Therefore, if the lower limit command value corrected using the opening degree is smaller than the appropriate value, it can be approximated to the appropriate value.

According to the eleventh aspect of the invention, if the amount of refrigerant that actually flows through the expansion valve (13) in the lower-limit-controlled state is determined to be larger than the appropriate control target amount of refrigerant flow, the lower limit command value is corrected to a smaller value than the lower limit command value corrected using the opening degree. Therefore, if the lower limit command value corrected using the opening degree is larger than the appropriate value, it can be approximated to the appropriate value.

According to the twelfth aspect of the invention, whether or not to carry out the opening degree detection operation is determined based on whether or not the predetermined condition is satisfied at startup of the refrigeration apparatus (10). Therefore, it can be prevented that the opening degree detection operation is carried out at every startup of the refrigeration apparatus (10) and, therefore, it takes long time to start the normal operation.

According to the thirteenth aspect of the invention, even if the opening degree detection operation is not performed at startup of the refrigeration apparatus (10), the lower limit command value is corrected using the correction value stored in the memory part (35). Therefore, even if the opening degree detection operation is not carried out at startup of the refrigeration apparatus (10), an opening characteristic of the expansion valve (13) is reflected in the lower limit command value, whereby the flow control using the expansion valve (13) can be optimized.

BRIEF DESCRIPTION OF DRAWINGS

[FIG. 1] FIG. 1 is a schematic block diagram of a refrigeration apparatus according to an embodiment of the present invention.

[FIG. 2] FIG. 2 is a longitudinal cross-sectional view of an expansion valve in the above embodiment of the present invention.

[FIG. 3] FIG 3 is a graph showing the flow characteristics of expansion valves for the above embodiment of the present invention.

[FIG. 4] FIG. 4 is a table showing lower limit command values set in a valve control section in the above embodiment of the present invention.

[FIG. 5] FIG. 5 is a flow chart showing the flow of an opening degree detection operation and a first correction operation in the refrigeration apparatus according to the above embodiment of the present invention.

[FIG. 6] FIG. 6 is a flow chart showing the flow of a second correction operation in the refrigeration apparatus according to the above embodiment of the present invention.

[FIG. 7] FIG. 7 is a schematic block diagram of a refrigeration apparatus according to a modification of the above embodiment of the present invention.

LIST OF REFERENCE NUMERALS

10 refrigeration apparatus
11 compressor
12 external heat exchanger
13 expansion valve
14 internal heat exchanger
20 refrigerant circuit
21 external fan
22 internal fan
30 controller
31 compressor control section
32 fan control section (opening degree detection means)
33 valve control section (valve control means)
34 control opening correction section (opening degree detection means)

BEST MODE FOR CARRYING OUT THE INVENTION

An embodiment of the present invention will be described below in detail with reference to the drawings.

This embodiment is a refrigeration apparatus (10) according to the present invention. The refrigeration apparatus (10) of this embodiment is constituted as a container refrigeration apparatus (10) for cooling the interior of a container. The refrigeration apparatus (10) is configured so that the preset temperature in the interior of the cold storage can be selected within a relatively wide temperature range (for example, from -30°C to 46°C).

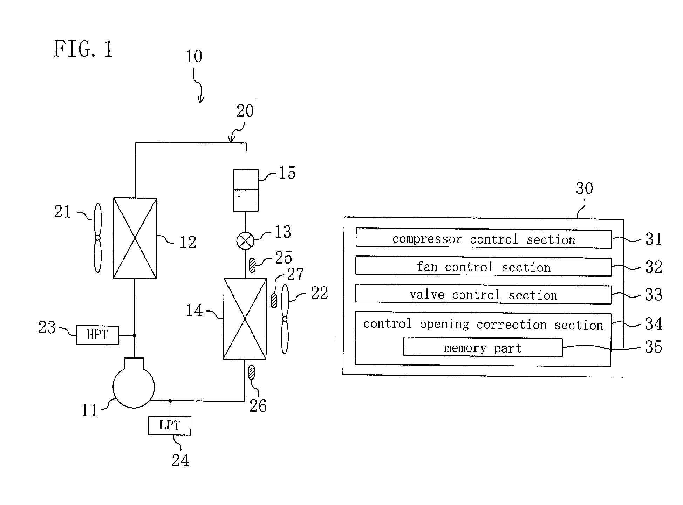

As shown in FIG. 1, the refrigeration apparatus (10) includes a refrigerant circuit (20) charged with refrigerant. The refrigerant circuit (20) includes a compressor (11), an external heat exchanger (12), an expansion valve (13) and an internal heat exchanger (14) all connected therein. The refrigerant circuit (20) operates in a vapor compression refrigeration cycle by circulating the refrigerant therethrough.

The compressor (11) is constituted, for example, as a high-pressure dome compressor. The discharge side of the compressor (11) is connected to the gas side of the external heat exchanger (12). The suction side of the compressor (11) is connected to the gas side of the internal heat exchanger (14).

The external heat exchanger (12) is constituted by a cross-fin-and-tube heat exchanger. Disposed near to the external heat exchanger (12) is an external fan (21) for feeding external air to the external heat exchanger (12). The external heat exchanger (12) provides heat exchange between external air and the refrigerant. The liquid side of the external heat exchanger (12) is connected to the expansion valve (13). Disposed between the external heat exchanger (12) and the expansion valve (13) is a receiver (15) for temporarily accumulating the refrigerant.

The internal heat exchanger (14) is constituted by a cross-fin-and-tube heat exchanger. Disposed near to the internal heat exchanger (14) is an internal fan (22) for feeding internal air to the internal heat exchanger (14). The internal heat exchanger (14) provides heat exchange between internal air and the refrigerant. The liquid side of the internal heat exchanger (14) is connected to the expansion valve (13).

The expansion valve (13) is constituted by an motor-operated expansion valve variable in opening. The opening of the expansion valve (13) is adjusted according to control pulses (an opening command value) of a pulse signal output by the later-described valve control section (33). Details of the expansion valve (13) will be described later.

The refrigeration apparatus (10) includes a controller (30). The controller (30) includes a compressor control section (31), a fan control section (32), a valve control section (33) and a control opening correction section (34). Details of the controller (30) will be described later.

The refrigeration apparatus (10) of this embodiment is provided also with a plurality of sensors. Specifically, at the discharge side of the compressor (11) of the refrigerant circuit (20), a high-side pressure sensor (23) is disposed for detecting the pressure of high-pressure refrigerant discharged from the compressor (11). On the other hand, at the suction side of the compressor (11), a low-side pressure sensor (24) is disposed for detecting the pressure of low-pressure refrigerant being sucked into the compressor (11). The measured values of the high-side pressure sensor (23) and the low-side pressure sensor (24) are detected in gauge pressure.

At the entrance side of the internal heat exchanger (14) serving as an evaporator, an entrance temperature sensor (25) is disposed for detecting the temperature of refrigerant flowing into the internal heat exchanger (14). On the other hand, at the exit side of the internal heat exchanger (14), an exit temperature sensor (26) is disposed for detecting the temperature of refrigerant flowing out of the internal heat exchanger (14). Furthermore, in the vicinity of the internal heat exchanger (14), a suction temperature sensor (27) is disposed for measuring the temperature of air flowing towards the internal heat exchanger (14). The measured values of these sensors (23-27) are input to the controller (30).

- STRUCTURE OF EXPANSION VALVE -

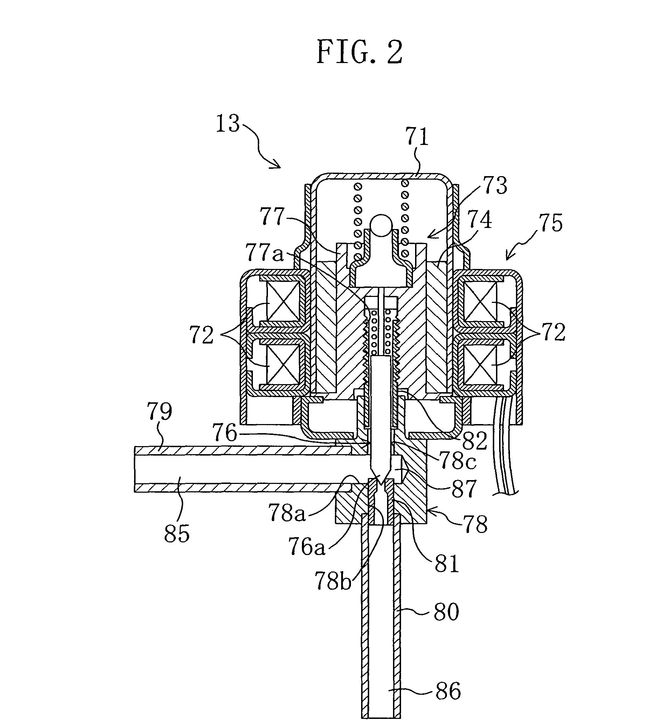

The expansion valve (13) of the refrigerant circuit (20) is a direct-acting motor-operated expansion valve. Here, the expansion valve (13) will be described with reference to FIG. 2.

In the expansion valve (13), a pulse motor (75) is constituted by: a solenoid (72) as a stator placed on the outer periphery of a cylindrical motor casing (71); and a rotor (73) placed in the casing (71) and having a magnet (74) mounted thereon. The expansion valve (13) is configured to move up and down a needle (76), at the distal end of which a valve element (76a) is formed, according to the rotation of the rotor (73).

The rotor (73) includes a cylindrical bush (77) and the magnet (74) mounted on the outer periphery of the bush (77). The bush (77) has a hole (77a) formed along its rotation axis to open downward. The hole (77a) is internally screw-threaded to form an internal screw. In the hole (77a), the needle (76) is fixed at the top end to the rotor (73) and disposed to extend downward.

The motor casing (71) is mounted at the bottom integrally to a columnar valve body (78). In the valve body (78), two holes (78a, 78b) are formed orthogonally across each other as flow channels that open laterally and downward. The valve body (78) is joined to first and second joints (79, 80) communicated with the holes (78a, 78b) to form first and second pipe lines (85, 86), respectively. The hole (78b) connected to the second joint (80) is internally provided with a valve seat (81) for seating the valve element (76a).

In the valve body (78), a hole (78c) is also formed to extend upward from the hole (78b) provided with the valve seat (81). Disposed at the top of the valve body (78) is a cylindrical member (82) communicated with the internal space of the hole (78c) and extending upward. The outer periphery of the cylindrical member (82) is formed into a screw and screw-engaged with the hole (77a) in the rotor (73). Thus, upon rotation of the rotor (73), the rotor (73) moves up and down relative to the valve body (78) fixed to the motor casing (71).

In the interior of the cylindrical member (82), the needle (76) is disposed to extend downward in the hole (77a) with its top end fixed to the rotor (73). The needle (76) is inserted also in the hole (78c) of the valve body (78) communicated with the internal space of the cylindrical member (82). The valve element (76a) at the lower end of the needle (76) is opposed, at a location where the holes (78a, 78b) in the valve body (78) cross each other (i.e., a connecting part (87)), to the valve seat (81) provided in the valve body (78). Thus, upon upward and downward movement of the rotor (73) as described above, the needle (76) accordingly moves up and down in the cylindrical member (82) and in the hole (78c) of the valve body (78). With this movement, the valve element (76a) at the lower end of the needle (76) moves up and down relative to the valve seat (81) (i.e., moves in the longitudinal direction of the second pipe line), thereby opening and closing the expansion valve (13).

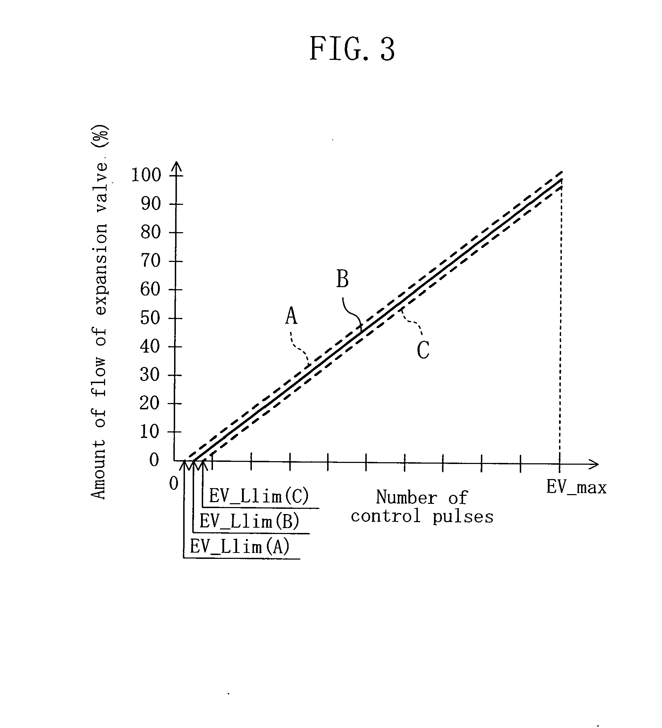

Expansion valves (13) for use in the refrigeration apparatus (10) are products having a maximum number of control pulses (EV) of EV_max (for example, EV_max = 2000). As shown in FIG. 3, these products have different flow characteristics, which show the relationship between the number of control pulses (EV) and the amount of flow through the expansion valve (13), varying from each other within the range from Characteristic Line A to Characteristic Line C. Characteristic Line A indicates the flow characteristic of an expansion valve (13) whose flow rate is the maximum among these products. Characteristic Line B indicates the flow characteristic of an expansion valve (13) whose flow rate is average among these products. Characteristic Line C indicates the flow characteristic of an expansion valve (13) whose flow rate is the minimum among these products. For these products, the assumed range of individual variations between different expansion valves in opening degree (EV_Llim), which is the number of control pulses (EV) for use in changing the expansion valve (13) from an open state to a closed state, is from EV_Llim(A) pulses (for example, EV_Llim(A) = 50) to EV_Llim(C) pulses (for example, EV_Llim(C) = 150). The standard of the flow rate of each expansion valve (13) is determined as the amount of flow thereof in fully-open position under a condition in which the preset temperature in the interior of the cold storage is relatively high (for example, 30°C).

- OPERATION -

A cooling operation for cooling the interior of the cold storage in the container is described as an operation of the refrigeration apparatus (10) of this embodiment. The cooling operation is a normal operation for adjusting the temperature of the interior of the cold storage that is a space to be controlled. The cooling operation is started when the compressor (11) is activated. In this case, the refrigerant circuit (20) operates in a refrigeration cycle in which the external heat exchanger (12) acts as a condenser and the internal heat exchanger (14) acts as an evaporator.

Specifically, the refrigerant discharged from the compressor (11) releases, in the external heat exchanger (12), heat to external air to condense. The refrigerant having condensed in the external heat exchanger (12) is reduced in pressure by the expansion valve (13) and then flows into the internal heat exchanger (14). In the internal heat exchanger (14), the refrigerant takes heat from internal air to evaporate. On the other hand, the internal air cooled by the internal heat exchanger (14) is fed into the cold storage. The refrigerant having evaporated in the internal heat exchanger (14) is sucked into the compressor (11) and compressed therein.

- CONFIGURATION OF CONTROLLER -

As described previously, the controller (30) includes a compressor control section (31), a fan control section (32), a valve control section (33) and a control opening correction section (34). The valve control section (33) constitutes a valve control means. The control opening correction section (34) constitutes an opening degree detection means.

Specifically, the compressor control section (31) is configured to control the operating condition of the compressor (11). For example, the compressor control section (31) controls the operating capacity of the compressor (11) to bring the measured value (LPT) of the low-side pressure sensor (24) to a predetermined desired value.

The fan control section (32) is configured to control the operating conditions of the external fan (21) and the internal fan (22). The fan control section (32) controls the high-side pressure in the refrigeration cycle by controlling the operating condition of the external fan (21). Specifically, when the measured value (HPT) of the high-side pressure sensor (23) exceeds a first high-side pressure reference value during operation of the compressor (11), the fan control section (32) activates the external fan (21). On the other hand, when the measured value (HPT) of the high-side pressure sensor (23) falls below a second high-side pressure reference value, the fan control section (32) deactivates the external fan (21). The fan control section (32) deactivates the external fan (21) also when the compressor (11) is deactivated. These high-side pressure reference values are set at higher values in the later-described warming-up and pump-down operations than in the normal operation.

The valve control section (33) is configured to control the opening of the expansion valve (13) during the cooling operation. The valve control section (33) performs a superheat control by controlling the opening of the expansion valve (13) to bring the degree of superheat (SH) of refrigerant at the exit of the internal heat exchanger (14) to a predetermined desired degree of superheat (for example, 5°C). However, when the detected value (HPT) of the high-side pressure sensor (23) reaches or exceeds a predetermined third high-side pressure reference value (for example, 2100 kPa), the valve control section (33) narrows the opening of the expansion valve (13) by a predetermined degree, in preference to the superheat control, to reduce the high-side pressure of the refrigeration cycle.

More specifically, in the superheat control, the valve control section (33) determines the number of control pulses (EV) to approach the degree of superheat (SH) of refrigerant at the exit of the internal heat exchanger (14) to the desired degree of superheat, and outputs a pulse signal composed of the determined number of control pulses (EV) to the pulse motor (75) of the expansion valve (13). When the degree of superheat (SH) of refrigerant at the exit of the internal heat exchanger (14) is above the desired degree of superheat, the valve control section (33) increases the number of control pulses (EV). On the other hand, when the degree of superheat (SH) of refrigerant at the exit of the internal heat exchanger (14) is below the desired degree of superheat, the valve control section (33) decreases the number of control pulses (EV).

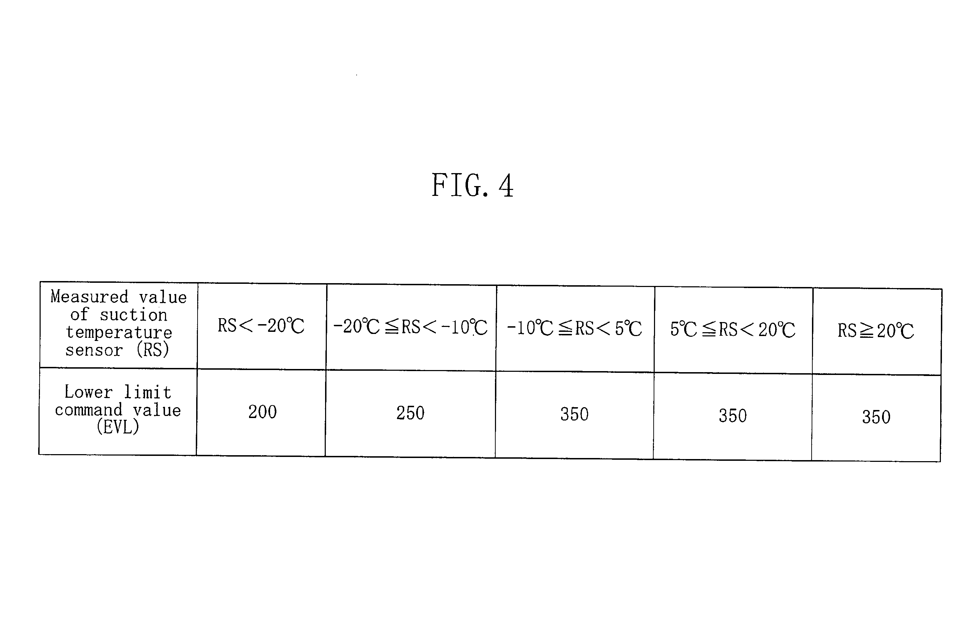

In the valve control section (33), as shown in FIG. 4, lower limit command values (EVL), which are lower limits of the number of control pulses, are previously set according to measured values (RS) of the suction temperature sensor (27) that are operating conditions. The lower limit command values (EVL) are set, one within each temperature range of measured values (RS) of the suction temperature sensor (27). Furthermore, the lower limit command values (EVL) are set to be greater as the measured value (RS) of the suction temperature sensor (27) increases. The valve control section (33) determines the number of control pulses (EV) within the range from the lower limit command value (EVL) to the above-mentioned maximum value (EV_max).

The control opening correction section (34) is configured to perform an opening degree detection operation of detecting the above-mentioned opening degree (EV_Llim), a first correction operation of correcting the lower limit command value (EVL) using the detected opening degree (EV_Llim), and a second correction operation of correcting again the lower limit command value (EVL) corrected in the first correction operation. The control opening correction section (34) performs the opening degree detection operation at startup of the refrigeration apparatus (10), and then performs the first correction operation just after the opening degree detection operation. Furthermore, the control opening correction section (34) performs the second correction operation during the cooling operation. In the first correction operation, a correction value (EV_adj) for use in correcting the lower limit command value (EVL) is calculated. In the second correction operation, not only the lower limit command value (EVL) but also the correction value (EV_adj) are corrected.

The control opening correction section (34) includes a memory part (35) for storing the correction value (EV_adj). The memory part (35) is constituted as a memory capable of storing the correction value (EV_adj). The memory part (35) is constituted by a static random access memory (SRAM) that can hold stored data even after the refrigeration apparatus (10) is powered off.

- OPERATIONS OF CONTROLLER -

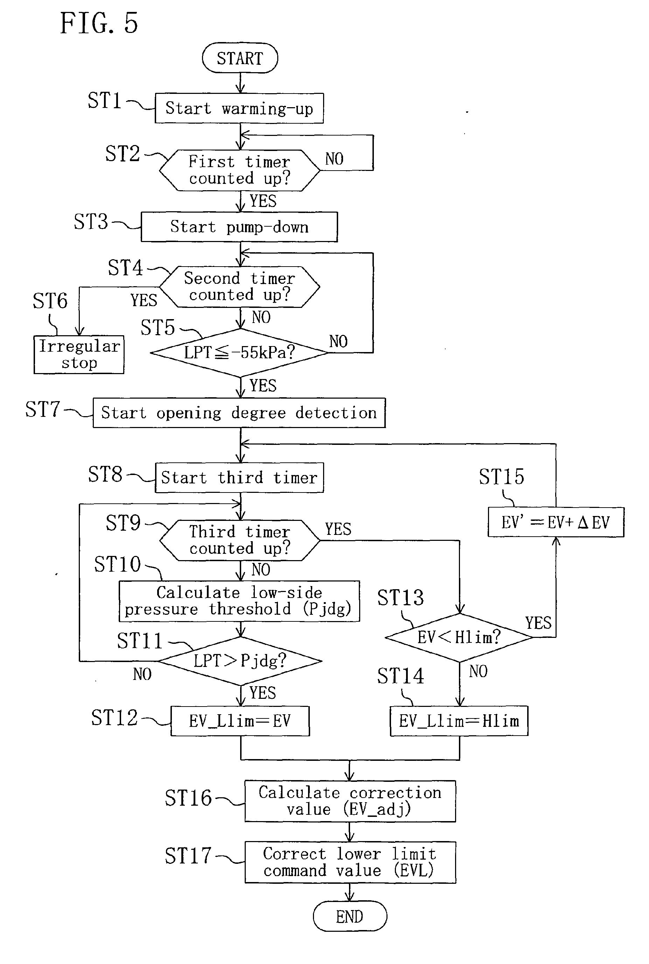

Out of the operations of the controller (30), the opening degree detection operation and the first and second correction operations will be described below. The opening degree detection operation and the first correction operation are performed in series and, therefore, will be described together with reference to FIG. 5. Furthermore, in the refrigeration apparatus (10), a warming-up operation and a pump-down operation are performed, prior to the opening degree detection operation, at startup of the refrigeration apparatus (10). Therefore, the warming-up and pump-down operations are described prior to the description of the opening degree detection operation.

First, when the refrigeration apparatus (10) is started up, in Step 1 (ST1), the controller (30) causes the refrigeration apparatus (10) to perform a warming-up operation. In Step 1 (ST1), the compressor control section (31) activates the compressor (11) and the fan control section (32) activates the internal fan (22). Furthermore, the valve control section (33) outputs a pulse signal whose number of control pulses (EV) is a preset value (for example, 800 pulses) to the expansion valve (13) to adjust the opening of the expansion valve (13). Moreover, in the controller (30), a first timer, for example, 90-second timer, is started simultaneously with the activation of the compressor (11).

In addition, the fan control section (33) in the warming-up operation controls the activation and deactivation of the external fan (21) based on the detected value (HPT) of the high-side pressure sensor (23). Specifically, when the detected value (HPT) of the high-side pressure sensor (23) exceeds a predetermined first high-side pressure reference value (for example, 1800 kPa), the fan control section (32) activates the external fan (21). On the other hand, when the detected value (HPT) of the high-side pressure sensor (23) falls below a predetermined second high-side pressure reference value (for example, 1600 kPa), the fan control section (32) deactivates the external fan (21). In the warming-up operation, the high-side pressure of the refrigeration cycle is adjusted within a fixed range from the first high-side pressure reference value to the second high-side pressure reference value. In this embodiment, the fan control section (32), which performs the above high-side pressure control prior to the opening degree detection operation, constitutes an opening degree detection means together with the control opening correction section (34).

In Step 2 (ST2), the controller (30) makes a first timer determination of determining whether the first timer still counts. If the first timer has already counted up, the controller (30) determines that the warming-up operation has terminated, resets the first timer and then carries out Step 3 (ST3). On the other hand, if the first timer still counts, the controller (30) repeats Step 2 (ST2) until the first timer counts up.

In Step 3 (ST3), the controller (30) causes the refrigeration apparatus (10) to perform a pump-down operation.

In Step 3 (ST3), the valve control section (33) sets the expansion valve (13) to a fully-closed state and a second timer, for example a 120-second timer, is started. The pump-down operation is started from the point of time when the expansion valve (13) is closed. The operation of the compressor (11) is continued from the warming-up operation. In the pump-down operation, the compressor (11) is driven with the expansion valve (13) closed, whereby no refrigerant flows into the internal heat exchanger (14) and the refrigerant in the internal heat exchanger (14) is sucked into the compressor (11). Furthermore, in the pump-down operation, like the warming-up operation, the fan control section (32) adjusts the high-side pressure of the refrigeration cycle within the fixed range from the first high-side pressure reference value to the second high-side pressure reference value. Upon end of Step 3 (ST3), Step 4 (ST4) is carried out.

In Step 4 (ST4), the controller (30) makes a second timer determination of determining whether the second timer still counts. If the second timer has already counted up, the controller (30) determines that the refrigeration apparatus (10) must be irregularly stopped, proceeds to Step 6 (ST6) and irregularly stops the refrigeration apparatus (10). On the other hand, if the second timer still counts, the controller (30) carries out Step 5 (ST5).

In Step 5 (ST5), determination is made of whether the pump-down operation should be terminated. If the measured value (LPT) of the low-side pressure sensor (24) is equal to or lower than a predetermined first low-side pressure reference value (for example, -55 kPa), the controller (30) determines that the pump-down operation should be terminated, resets the second timer and then carries out Step 7 (ST7). On the other hand, if the measured value (LPT) of the low-side pressure sensor (24) is neither equal to nor lower than the predetermined first low-side pressure reference value, the controller (30) returns to Step 4 (ST4) and makes the second timer determination. To sum up, the refrigeration apparatus (10) of this embodiment is irregularly stopped when the measured value (LPT) of the low-side pressure sensor (24) neither reaches nor falls below the first low-side pressure reference value before the second timer counts up.

With Step 7(ST7), the opening degree detection operation of the control opening correction section (34) of the controller (30) starts. In Step 7 (ST7), the control opening correction section (34) deactivates the compressor (11) and also deactivates the external fan (21) if it is in operation. The operation of the internal fan (22) is continued. Furthermore, in Step 7 (ST7), the control opening correction section (34) outputs a pulse signal whose number of control pulses (EV) is a predetermined initial value (for example, 50 pulses) to the expansion valve (13) to adjust the opening of the expansion valve (13). Thus, the needle (76) of the expansion valve (13) slightly moves up. The initial value is set at the lower limit (EV_Llim(A)) of the assumed range of individual variations in the opening degree (EV_Llim) between different expansion valves (13). Upon end of Step 7 (ST7), the control proceeds to Step 8 (ST8), in which a third timer, for example, a 20-second timer, is started.

In Step 9 (ST9), the control opening correction section (34) makes a third timer determination of determining whether the third timer still counts. If the third timer still counts, the control opening correction section (34) sequentially carries out Step 10 (ST10) and Step 11 (ST11). On the other hand, if the third timer has already counted up, the control opening correction section (34) carries out Step 13 (ST13).

In Step 10 (ST10), the control opening correction section (34) calculates a low-side pressure threshold value (Pjdg) for use in determining whether the expansion valve (13) is open. The low-side pressure threshold value (Pjdg) is calculated using the following Equation 1. Upon end of Step 10 (ST10), Step 11 (ST11) is carried out.

$$\text{Equation 1: Pjdg} = \text{Ref(RS) x F}$$

In Equation 1, Pjdg denotes a low-side pressure threshold value, RS denotes a measured value of the suction temperature sensor (27) and F denotes a safety factor (for example, F = 0.5). Ref denotes the function for obtaining the saturated pressure of refrigerant in use from the temperature in gage pressure. Using the above Equation 1, the pressure in which the safety factor is taken into the saturated pressure at the measured value (RS) of the suction temperature sensor (27) is obtained as the low-side pressure threshold value.

In Step 11 (ST11), a determination operation (second operation) is performed by determining whether the expansion valve (13) is open, that is, whether refrigerant is passing through the expansion valve (13). If the measured value (LPT) of the low-side pressure sensor (24) is above the low-side pressure threshold value (Pjdg), the control opening correction section (34) determines that the expansion valve (13) is open, and carries out Step 12 (ST12). On the other hand, if the measured value (LPT) of the low-side pressure sensor (24) is equal to or below the low-side pressure threshold value (Pjdg), the control opening correction section (34) determines that the expansion valve (13) is not open, and returns to Step 9 (ST9).

In Step 12 (ST12), the control opening correction section (34) detects the current number of control pulses (EV) for the expansion valve (13) as the opening degree (EV_Llim). The detected opening degree (EV_Llim) is temporarily stored in the memory part (35). Upon end of Step 12 (ST12), Step 16 (ST16) is carried out. The opening degree detection operation terminates with Step 12 (ST12), and the first correction operation then starts with Step 16 (ST16).

In Step 13 (ST13), determination is made of whether the current number of control pulses (EV) for the expansion valve (13) is below a predetermined upper limit (Hlim) (for example, Hlim = 150 pulses). The upper limit (Hlim) is the upper limit of the assumed range of individual variations in opening degree (EV_Llim) between different expansion valves.

If in Step 13 (ST13) the current number of control pulses (EV) is equal to or above the upper limit (Hlim), the control opening correction section (34) carries out Step 14 (ST14) and terminates the opening degree detection operation. In Step 14 (ST14), the control opening correction section (34) detects the value of the upper limit (Hlim) as the opening degree (EV_Llim). The detected opening degree (EV_Llim) is temporarily stored in the memory part (35). In the opening degree detection operation, when the current number of control pulses (EV) reaches the predetermined upper limit (Hlim), the expansion valve (13) is determined to be open even if the measured value (LPT) of the low-side pressure sensor (24) is equal to or below the low-side pressure threshold value (Pjdg).

On the other hand, if in Step 13 (ST13) the current number of control pulses (EV) is below the predetermined upper limit, the control opening correction section (34) determines that the expansion valve (13) is not yet open, proceeds to Step 15 (ST15) and then returns to Step 8 (ST8). In Step 15 (ST15), the control opening correction section (34) performs an opening increase operation (first operation) of outputting to the expansion valve (13) a pulse signal composed of a number of control pulses (EV') obtained by adding a preset value (ΔEV) (for example, ΔEV = 20 pulses) to the current number of control pulses (EV) for the expansion valve (13) to adjust the opening of the expansion valve (13). After the opening increase operation, the number of control pulses (EV') of a pulse signal output in the opening increase operation is the current number of control pulses (EV).

As described previously, the first correction operation starts with Step 16 (ST16). In Step 16 (ST16), the control opening correction section (34) calculates a correction value (EV_adj) for use in correcting the lower limit command value (EVL). The correction value (EV_adj) is calculated using the following Equation 2.

$$\text{Equation 2: } EV\_adj = EV\_Llim - EV\_ave$$

In Equation 2, EV_adj denotes a correction value and EV_ave denotes an assumed value of the opening degree (EV_Llim) of the expansion valve (13) used in the refrigeration apparatus (10) (for example, EV_ave = 100). The assumed value used in this embodiment is the average between the upper and lower limits of the assumed range of individual variations in opening degree (EV_Llim) between different expansion valves. If the average (EV_ave) is larger than the opening degree (EV_Llim), the correction value (EV_adj) is a negative value. The correction value (EV_adj) calculated from Equation 2 is stored in the memory part (35). If there is a correction value (EV_adj) saved previously in the memory part (35), a new correction value (EV_adj) is written over the existing value and saved in the memory part (35). Upon end of Step 16 (ST16), Step 17 (ST17) is carried out.

In Step 17 (ST17), the control opening correction section (34) corrects the lower limit command value (EVL) using the correction value (EV_adj). The corrected lower limit (EVL') of the number of control pulses is a value obtained by adding the correction value (EV_adj) to the lower limit (EVL) set in the valve control section (33). In Step 17 (ST17), the lower limit (EVL) is corrected for each operating condition. Upon end of Step 17 (ST17), the first correction operation ends. When the first correction operation ends, the compressor (11) is activated and the external fan (21) is also activated, whereby a cooling operation, which is a normal operation, is started.

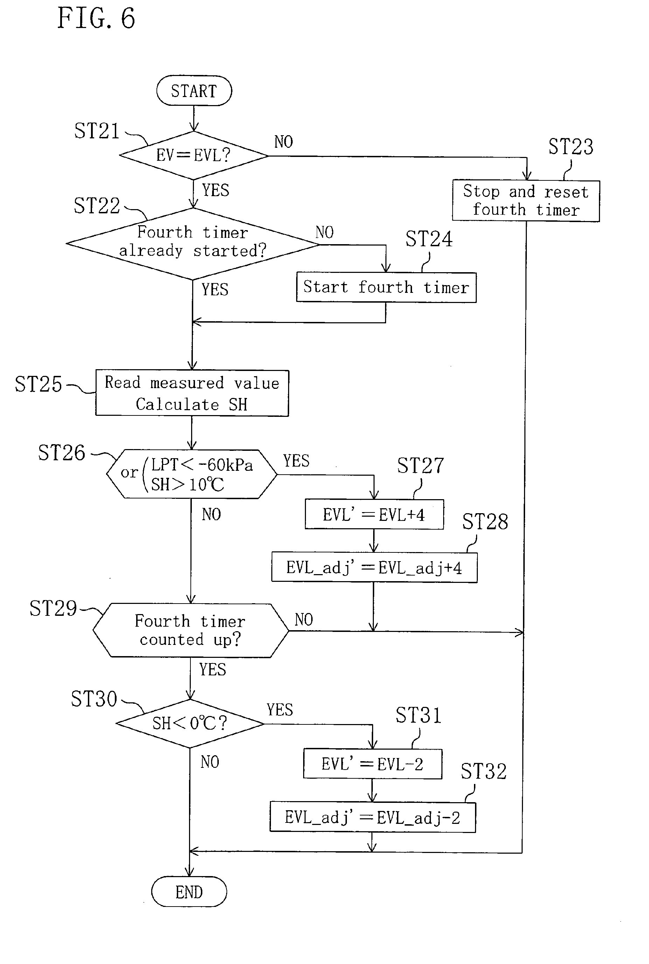

Next, the second correction operation will be described with reference to FIG. 6. Throughout the second correction operation, the superheat control of the valve control section (33) is stopped.

In this refrigeration apparatus (10), in adjusting the degree of superheat (SH) of refrigerant at the exit of the internal heat exchanger (14), the valve control section (33) sometimes outputs a pulse signal whose number of control pulses (EV) is the lower limit command value (EVL) to forcedly throttle the opening of the expansion valve (13). The second correction operation is performed, for example, just after the valve control section (33) outputs a pulse signal whose number of control pulses (EV) is the lower limit command value (EVL).

In the second correction operation, first in Step 21 (ST21), the control opening correction section (34) determines whether the current number of control pulses (EV) for the expansion valve (13) is equal to the lower limit command value (EVL). If the expansion valve (13) is in a lower-limit-controlled state in which the current number of control pulses (EV) for the expansion valve (13) is equal to the lower limit command value (EVL), the control opening correction section (34) carries out Step 22 (ST22). On the other hand, if the current number of control pulses (EV) for the expansion valve (13) is not equal to the lower limit command value (EVL), the control opening correction section (34) terminates the second correction operation, after in Step 23 (ST23) stopping and resetting a fourth timer, for example, a 120-second timer, if it is in operation. When the second correction operation terminates, the superheat control of the valve control section (33) is restarted.

In Step 22 (ST22), the control opening correction section (34) determines whether the fourth timer has been already started, i.e., whether the fourth timer is in operation. If the fourth timer is not yet started, the control opening correction section (34) starts the fourth timer in Step 24 (ST24) and then carries out Step 25 (ST25). On the other hand, if the fourth timer has been already started, the control opening correction section (34) bypasses Step 24 (ST24) and carries out Step 25 (ST25).

In Step 25 (ST25), the control opening correction section (34) reads a measured value (LPT) of the low-side pressure sensor (24), a measured value of the entrance temperature sensor (25) and a measured value of the exit temperature sensor (26) and calculates the degree of superheat (SH) of refrigerant at the exit of the internal heat exchanger (14). The control opening correction section (34) calculates as the degree of superheat (SH) the difference between the measured values of the entrance temperature sensor (25) and the exit temperature sensor (26). Upon end of Step 25 (ST25), Step 26 (ST26) is carried out.

In Step 26 (ST26), the control opening correction section (34) determines whether the lower limit command value (EVL) should be corrected to a "wider" value. The control opening correction section (34) determines that the lower limit command value (EVL) should be corrected to a wider value and sequentially carries out Step 27 (ST27) and Step 28 (ST28), if at least one of the following two conditions is satisfied: Condition 1-1 that the measured value (LPT) of the low-side pressure sensor (24) is below a predetermined second low-side pressure reference value (for example, -60 kPa); and Condition 1-2 that the degree of superheat (SH) of refrigerant calculated in Step 25 (ST25) is above a predetermined first reference degree of superheat (for example, 10°C). On the other hand, if both Conditions 1-1 and 1-2 are not satisfied, the control opening correction section (34) carries out Step 29 (ST29). Conditions 1-1 and 1-2 are criteria for determining whether, in the lower-limit-controlled state, the refrigerant flow through the expansion valve (13) is in a predetermined excessively small amount state, i.e., the amount of refrigerant flow through the expansion valve (13) is small as compared with an appropriate amount of refrigerant flow.

In Step 27 (ST27), the control opening correction section (34) corrects the lower limit command value (EVL) using the following Equation 3. Furthermore, in Step 28 (ST28), the control opening correction section (34) corrects the correction value (EV_adj) using the following Equation 4. The corrected correction value (EV_adj') is overwritten and saved in the memory part (35).

$$\text{Equation 3: } EVL' = EVL + E1$$

$$\text{Equation 4: } EV\_adj' = EV\_adj + E1$$

In Equation 3, EVL' denotes a corrected lower limit command value, EVL denotes a lower limit command value before correction, and E1 denotes a first correction opening (for example, E1 = 4 pulses). In Equation 4, EV_adj' denotes a corrected correction value, and EV_adj denotes a correction value before correction stored in the memory part (35). The first correction opening (E1) is previously set in the control opening correction section (34). Used as the first correction opening (E1) is a smaller value than the preset value (ΔEV).

Upon end of Step 28 (ST28), the second correction operation terminates. After the end of the second correction operation, the valve control section (33) restarts the superheat control and outputs to the expansion valve (13) a pulse signal whose number of control pulses is the corrected lower limit command value (EVL') to adjust the opening of the expansion valve (13) to be wider. When the opening of the expansion valve (13) is adjusted, the amount of refrigerant flow through the expansion valve (13) increases. Thus, the low-side pressure in the refrigeration cycle rises and the degree of superheat of refrigerant at the exit of the internal heat exchanger (14) decreases.

In Step 29 (ST29), the control opening correction section (34) makes a fourth timer determination of determining whether the fourth timer started in Step 24 (ST24) still counts. Upon end of Step 29 (ST29), Step 30 (ST30) is carried out. If the fourth timer has already counted up, the control opening correction section (34) proceeds to Step 30 (ST30). On the other hand, if the fourth timer still counts, the control opening correction section (34) terminates the second correction operation.

In Step 30 (ST30), the control opening correction section (34) determines whether the lower limit command value (EVL) should be corrected to a "narrower" value. If Condition 2 that the degree of superheat (SH) of refrigerant calculated in Step 25 (ST25) is below a predetermined second reference degree of superheat (for example, 0°C) is satisfied, the control opening correction section (34) determines that the lower limit command value (EVL) should be corrected to a narrower value because refrigerant sucked into the compressor (11) falls into a wet state, and sequentially carries out Step 31 (ST31) and Step 32 (ST32). On the other hand, if Condition 2 is not satisfied, the control opening correction section (34) immediately terminates the second correction operation. Condition 2 is a criterion for determining whether, in the lower-limit-controlled state, the refrigerant flow through the expansion valve (13) is in a predetermined excessively large amount state, i.e., the amount of refrigerant flow through the expansion valve (13) is large as compared with the appropriate amount of refrigerant flow.

In Step 31 (ST31), the control opening correction section (34) corrects the lower limit command value (EVL) using the following Equation 5. Furthermore, in Step 32 (ST32), the control opening correction section (34) corrects the correction value (EV_adj) using the following Equation 6. The corrected correction value (EV_adj') is overwritten and saved in the memory part (35).

$$\text{Equation 5: } EVL' = EVL - E2$$

$$\text{Equation 6: } EV\_adj' = EV\_adj - E2$$

In Equation 5, EVL' denotes a corrected lower limit command value, EVL denotes a lower limit command value before correction, and E2 denotes a second correction opening (for example, E2 = 2 pulses). In Equation 6, EV_adj' denotes a corrected correction value, and EV_adj denotes a correction value before correction stored in the memory part (35). The second correction opening (E2) is previously set in the control opening correction section (34). Used as the second correction opening (E2) is a smaller value than the first correction opening (E1).

Upon end of Step 32 (ST32), the second correction operation terminates. After the end of the second correction operation, the valve control section (33) restarts the superheat control and outputs to the expansion valve (13) a pulse signal whose number of control pulses is the corrected lower limit command value (EVL') to adjust the opening of the expansion valve (13) to be narrower. When the opening of the expansion valve (13) is adjusted, the amount of refrigerant flow through the expansion valve (13) decreases. Thus, the degree of superheat of refrigerant at the exit of the internal heat exchanger (14) increases, which avoids a wet condition in which the compressor (11) is likely to be damaged. When a predetermined period of time (for example, one minute) has passed since the end of the second correction operation, the control opening correction section (34) starts the second correction operation again.

- EFFECTS OF EMBODIMENT -

According to this embodiment, since an opening degree, which is an opening command value for use in changing the expansion valve (13) from closed to open state, is detected and the expansion valve (13) is controlled using the detected opening degree, an opening characteristic of the expansion valve (13) is reflected in the control on the expansion valve (13). In other words, the control on individual expansion valves (13) is carried out in consideration of differences between individual expansion valves (13). Therefore, differences between individual expansion valves (13) are reflected in the amount of refrigerant flow through individual expansion valves (13), whereby the flow control using each expansion valve (13) can be optimized.

According to this embodiment, in performing the opening degree detection operation, the high-side pressure of the refrigeration cycle is constant. If the high-side pressure of the refrigeration cycle were not adjusted prior to the opening degree detection operation, the high-side pressure during the opening degree detection operation would change according to the operating conditions, such as the temperature of air fed to the condenser, and the refrigerant pressure acting on the expansion valve (13) also would change according to the operating conditions. Therefore, the degree of change in state of low-pressure refrigerant upon change of the expansion valve (13) to the open state would vary depending upon the operating conditions, which would make it difficult to accurately detect the opening degree. In contrast, in this embodiment, since the high-side pressure of the refrigeration cycle is constant in performing the opening degree detection operation, the refrigerant pressure acting on the expansion valve (13) is constant independent of the operating conditions. Therefore, the degree of change in state of low-pressure refrigerant upon change of the expansion valve (13) to the open state is not dependent upon the operating conditions but constant, which provides an accurate detection of the opening degree.

Furthermore, in this embodiment, the value of pressure changing faster than temperature is used to detect the opening degree. Therefore, the opening degree detection operation can be completed within a relatively short time.

According to this embodiment, when the opening command value reaches the upper limit, the upper limit is detected as the opening degree regardless of the state of the low-pressure refrigerant. Thus, the opening degree does not exceed the assumed range of individual variations in opening degree between different expansion valves. Therefore, when the expansion valve (13) changes to the open state, even if the change in state of low-pressure refrigerant is different from expected, it can be prevented that the value of opening degree becomes large beyond the assumed range of variations in opening degree.

According to this embodiment, since the control opening correction section (34) corrects the lower limit command value using the opening degree, an opening characteristic of the expansion valve (13) is reflected in the lower limit command value. In container refrigeration apparatuses (10) having a wide range of preset temperatures in the interior of the cold storage, generally, the standard amount of flow of the expansion valve (13) is determined under a condition in which the preset temperature in the interior of the cold storage is relatively high (for example, 30°C). Thus, when the preset temperature in the interior of the cold storage is set at a low temperature (for example, - 30°C), the opening of the expansion valve (13) is controlled to a value near to the lower limit of the number of control pulses (EV). For this reason, if the opening of the expansion valve (13) of a conventional refrigeration apparatus (10) without correction of the lower limit command value is shifted, for example, to a wider position with respect to an input opening command value, the following problem may occur. When the degree of superheat of refrigerant sucked in the compressor (11) is below the desired degree of superheat, even if the expansion valve (13) is throttled to an extent that the opening command value reaches the lower limit, the actual opening of the expansion valve (13) does not reach an expected control target opening. In this case, the amount of refrigerant flow through the expansion valve (13) becomes larger than the appropriate amount of refrigerant flow and, therefore, the phenomenon that the refrigerant sucked in the compressor (11) falls into a wet state may not be eliminated. Unlike this, in this embodiment, the opening characteristic of the expansion valve (13) is reflected in the lower limit command value and the lower limit command value is a value for which differences between individual expansion valves (13) are taken into consideration. Therefore, when the degree of superheat of refrigerant sucked in the compressor (11) decreases, the expansion valve (13) can be throttled down to the expected control target opening or an opening near to this. This prevents that the amount of refrigerant flow through the expansion valve (13) becomes larger than the appropriate amount of refrigerant flow. Hence, it can be prevented that the refrigerant sucked in the compressor (11) falls into a wet state because the expansion valve (13) cannot be throttled to the expected opening.

In this embodiment, first, from the amount of refrigerant that actually flows through the expansion valve (13) in the lower-limit-controlled state, determination is made of whether the lower limit command value corrected using the opening degree is an appropriate value. Then, if needed to be corrected, the lower limit command value is corrected again. Therefore, the lower limit command value corrected using the opening degree can be corrected to a more appropriate value, whereby the flow control using the expansion valve (13) in the lower-limit-controlled state can be further optimized.

In this embodiment, if the amount of refrigerant that actually flows through the expansion valve (13) in the lower-limit-controlled state is determined to be smaller than an appropriate control target amount of refrigerant flow, the lower limit command value is corrected to a larger value than the lower limit command value corrected using the opening degree. Therefore, if the lower limit command value corrected using the opening degree is smaller than the appropriate value, it can be approximated to the appropriate value.

On the other hand, in this embodiment, if the amount of refrigerant that actually flows through the expansion valve (13) in the lower-limit-controlled state is determined to be larger than the appropriate control target amount of refrigerant flow, the lower limit command value is corrected to a smaller value than the lower limit command value corrected using the opening degree. Therefore, if the lower limit command value corrected using the opening degree is larger than the appropriate value, it can be approximated to the appropriate value.

- MODIFICATION OF EMBODIMENT -

A modification of the above embodiment will be described. In this modification, the control opening correction section (34) is configured to perform the opening degree detection operation at startup of the refrigeration apparatus (10) only if a predetermined condition is satisfied.

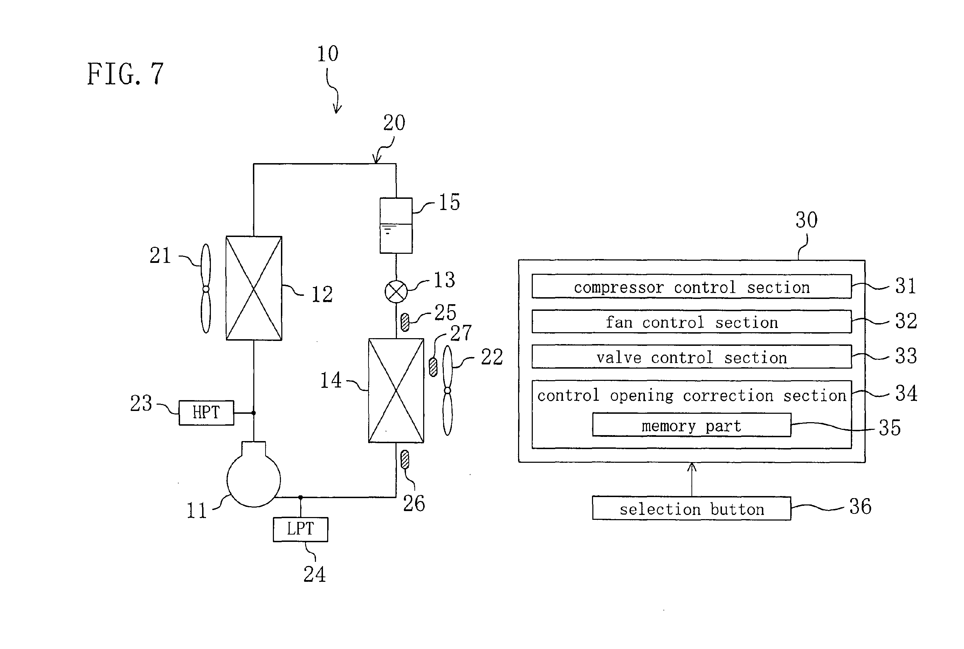

Specifically, as shown in FIG. 7, the refrigeration apparatus (10) further includes a selection button (36) with which the user can select whether or not to carry out the opening degree detection operation at startup of the refrigeration apparatus (10). The control opening correction section (34) is configured to perform the opening degree detection operation at startup of the refrigeration apparatus (10) if the user operates the selection button (36) to make a selection to carry out the opening degree detection operation. In other words, the above predetermined condition is a condition that an input is received by the selection button (36) for performing the opening degree detection operation.

When the selection button (36) for performing the opening degree detection operation receives an input, the control opening correction section (34) deletes the correction value (EV_adj) stored in the memory part (35). Then, the control opening correction section (34) performs the warming-up operation and pump-down operation and then performs the opening degree detection operation and first correction operation. In the opening degree detection operation, the opening degree (EV_Llim) is detected. In the first correction operation, the lower limit command value (EVL) is corrected using the opening degree (EV_Llim) detected in the opening degree detection operation, and the correction value (EV_adj) calculated using the opening degree (EV_Llim) is stored. When the first correction operation terminates, the valve control section (33) carries out the superheat control.

On the other hand, if the selection button (36) for performing the opening degree detection operation does not receive an input, the control opening correction section (34) of the controller (30) performs only the first correction operation after startup of the refrigeration apparatus (10). In the first correction operation, the lower limit command value (EVL) is corrected using the correction value (EV_adj) stored in the memory part (35). When the first correction operation terminates, the valve control section (33) carries out the superheat control.

In this modification, whether or not to carry out the opening degree detection operation is determined based on whether or not the selection button (36) receives an input at startup of the refrigeration apparatus (10). Therefore, it can be prevented that the opening degree detection operation is carried out at every startup of the refrigeration apparatus (10) and, therefore, it takes long time to start the normal operation.

Furthermore, in this modification, even if the opening degree detection operation is not carried out at startup of the refrigeration apparatus (10), the lower limit command value (EVL) is corrected using the correction value (EV_adj) stored in the memory part (35). Therefore, even if the opening degree detection operation is not carried out at startup of the refrigeration apparatus (10), an opening characteristic of the expansion valve (13) is reflected in the lower limit command value (EVL), whereby the flow control using the expansion valve (13) can be optimized.

«OTHER EMBODIMENTS»

The above embodiment may have the following configurations.

In the above embodiment, the control opening correction section (34) may be configured to correct the number of control pulses (EV) using the opening degree (EV_Llim) in the overall control range from the lower limit to the maximum value of the number of control pulses (EV) so that the actual opening of the expansion valve (30) approximates the control target opening dependent upon the number of control pulses (EV).

In the above embodiment, the opening degree detection operation and first correction operation may be performed in a factory where the refrigeration apparatus (10) has been manufactured, before the refrigeration apparatus (10) is shipped.

Furthermore, in the above embodiment, the control opening correction section (34) may be configured to store not the correction value (EV_adj) but the opening degree (EV_Llim).

Moreover, in the above embodiment, the refrigeration apparatus (10) may be configured to operate in a supercritical cycle in which the high-side pressure of the refrigeration cycle is set at a higher value than the critical pressure of the refrigerant. In this case, one of the external heat exchanger (12) and the internal heat exchanger (14) acts as a gas cooler and the other acts as an evaporator.

Furthermore, in the above embodiment, the refrigeration apparatus (10) may not be a container refrigeration apparatus but may be another type of refrigeration apparatus (for example, an air conditioner).

The above embodiments are merely preferred embodiments in nature and are not intended to limit the scope, applications and use of the invention.

INDUSTRIAL APPLICABILITY

As can be seen from the above description, the present invention is useful for refrigeration apparatuses including a refrigerant circuit provided with an expansion valve variable in opening.

**Claims**

1.  A refrigeration apparatus including a refrigerant circuit (20) provided with a compressor (11) and an expansion valve (13) variable in opening, the refrigerant circuit (20) being operable in a refrigeration cycle, and a valve control means (33) configured to control the opening of the expansion valve (13), the refrigeration apparatus comprising :

    opening degree detection means (32, 34) configured to perform, after a pump-down operation in which the compressor (11) is driven with the expansion valve (13) closed, an opening degree detection operation of detecting an opening degree that is an opening command value for use in changing the expansion valve (13) from a closed state to an open state, by determining whether the expansion valve (13) is open based on a change in state of low-pressure refrigerant between the expansion valve (13) and the suction side of the compressor (11), while gradually increasing the opening command value output to the expansion valve (13) with the compressor (11) deactivated,
    wherein the valve control means (33) is configured to control the expansion valve (13) using the opening degree detected in the opening degree detection operation.

2.  The refrigeration apparatus of claim 1, wherein the opening degree detection means (32, 34) is configured to adjust, in the pump-down operation, the high-side pressure of the refrigeration cycle within a fixed range.

3. The refrigeration apparatus of claim 1, wherein the refrigeration apparatus is configured to perform, prior to the pump-down operation, a warming-up operation in which the opening degree detection means (32, 34) adjusts the high-side pressure of the refrigeration cycle within a fixed range while the compressor (11) is driven with the expansion valve (13) open.

4. The refrigeration apparatus of claim 1, wherein the opening degree detection means (32, 34) is configured to detect as the opening degree an opening command value determined when the pressure of the low-pressure refrigerant exceeds a predetermined low-side pressure threshold value.

5. The refrigeration apparatus of claim 4, wherein when the opening command value reaches a predetermined upper limit, the opening degree detection means (32, 34) detects the upper limit as the opening degree even if the pressure of the low-pressure refrigerant is the low-side pressure threshold value or below.

6. The refrigeration apparatus of claim 1, wherein the opening degree detection means (32, 34) is configured to detect, in the opening degree detection operation, the opening degree by repeating a first operation of increasing the opening command value by a preset value and a second operation of determining whether the expansion valve (13) is open based on a change in state of the low-pressure refrigerant in this order until it is detected in the second operation that the expansion valve (13) is open.

7. The refrigeration apparatus of claim 1, wherein
the valve control means (33) is configured to determine the opening command value within a range not less than a lower limit command value previously set in the valve control means (33), and
the opening degree detection means (32, 34) is configured to correct the lower limit command value using the opening degree.

8. The refrigeration apparatus of claim 7, wherein the opening degree detection means (32, 34) is configured to set an assumed value of the opening degree, calculate as a correction value a value obtained by subtracting the assumed value from the opening degree, and calculate a corrected lower limit command value by adding the correction value to the lower limit command value previously set in the valve control means (33).

9. The refrigeration apparatus of claim 7, wherein the opening degree detection means (32, 34) is configured to correct again the lower limit command value, which has been corrected using the opening degree, if a predetermined criterion relating to the amount of refrigerant flow through the expansion valve (13) is satisfied in a lower-limit-controlled state in which, during a normal operation in which a space to be controlled is controlled in temperature, the opening command value is equal to the lower limit command value.

10. The refrigeration apparatus of claim 9, wherein the opening degree detection means (32, 34) is configured to correct again the lower limit command value, which has been corrected using the opening degree, to a larger value, if a first condition in which the refrigerant flow through the expansion valve (13) is in a predetermined excessively small amount state is satisfied as the criterion in the lower-limit-controlled state.

11. The refrigeration apparatus of claim 9, wherein the opening degree detection means (32, 34) is configured to correct again the lower limit command value, which has been corrected using the opening degree, to a smaller value, if a second condition in which the refrigerant flow through the expansion valve (13) is in a predetermined excessively large amount state is satisfied as the criterion in the lower-limit-controlled state.

12. The refrigeration apparatus of claim 1, wherein the opening degree detection means (32, 34) is configured to perform the opening degree detection operation at startup of the refrigeration apparatus (10) only if a predetermined condition is satisfied.

13. The refrigeration apparatus of claim 9, wherein
the opening degree detection means (32, 34) is configured to perform the opening degree detection operation at startup of the refrigeration apparatus (10) only if a predetermined condition is satisfied, and
the opening degree detection means (32, 34) comprises a memory part (35) for storing as a correction value the difference between the lower limit command value previously set in the valve control means (33) and the corrected lower limit command value and is configured to correct the lower limit command value using the correction value stored in the memory part (35) if not performing the opening degree detection operation at startup of the refrigeration apparatus (10).

# FIG. 2

# FIG. 3

FIG. 4

| Measured value of suction temperature sensor (RS) | RS < -20℃ | -20℃ ≦ RS < -10℃ | -10℃ ≦ RS < 5℃ | 5℃ ≦ RS < 20℃ | RS ≧ 20℃ |
|---|---|---|---|---|---|
| Lower limit command value (EVL) | 200 | 250 | 350 | 350 | 350 |

EP 2 226 593 A1

FIG. 5

START

ST1 — Start warming-up

ST2 — First timer counted up? — NO

YES

ST3 — Start pump-down

ST4 — Second timer counted up? — YES → ST6 Irregular stop

NO

ST5 — LPT ≦ −55kPa? — NO

YES

ST7 — Start opening degree detection

ST8 — Start third timer

ST15 — $EV' = EV + \Delta EV$

ST9 — Third timer counted up? — YES

NO

ST10 — Calculate low-side pressure threshold (Pjdg)

ST11 — LPT > Pjdg? — NO

YES

ST13 — EV < Hlim? — YES

NO

ST12 — EV_Llim = EV

ST14 — EV_Llim = Hlim

ST16 — Calculate correction value (EV_adj)

ST17 — Correct lower limit command value (EVL)

END

## FIG. 6

```
                          ( START )
                              │
         ST21                 ▼                    NO                      ST23
              ◇ EV = EVL? ◇─────────────────────────────────────┐         │
                              │                                  │  ┌──────────────────┐
                            YES                                  └─▶│ Stop and reset   │
         ST22                 ▼                   NO      ST24       │  fourth timer    │
              ◇ Fourth timer     ◇──────────────┐         │        └──────────────────┘
                already started? ◇              │  ┌───────────────────┐      │
                              │                 └─▶│ Start fourth timer │      │
                            YES                    └───────────────────┘      │
                              │◀───────────────────────────┘                  │
                              ▼                                                │
         ST25 ─┐   ┌──────────────────────┐                                   │
               └──▶│ Read measured value  │                                   │
                   │    Calculate SH      │                                   │
                   └──────────────────────┘                                   │
                              │                                                │
         ST26                 ▼        LPT < -60kPa   YES     ST27             │
              ◇ or ( SH > 10℃        ) ◇──────────────┐        │              │
                              │                        │  ┌──────────────┐    │
                            NO                         └─▶│ EVL' = EVL+4 │    │
                              │                           └──────────────┘    │
                              │                                   │   ST28     │
                              │                           ┌──────────────────────┐ │
                              │                           │ EVL_adj' = EVL_adj+4 │ │
                              │                           └──────────────────────┘ │
         ST29                 ▼                      NO             │              │
              ◇ Fourth timer      ◇─────────────────────────────────────────────┤
                counted up?       ◇                               │              │
                              │                                                  │
                            YES                                                  │
         ST30                 ▼                    YES    ST31                   │
              ◇ SH < 0℃ ? ◇─────────────────┐        │                         │
                              │              │  ┌──────────────┐                 │
                            NO               └─▶│ EVL' = EVL-2 │   ST32          │
                              │                 └──────────────┘    │            │
                              │                         │   ┌──────────────────────┐
                              │                         │   │ EVL_adj' = EVL_adj-2 │
                              │                         │   └──────────────────────┘
                              │◀────────────────────────────────┘                │
                              │◀──────────────────────────────────────────────────┘
                              ▼
                          ( END )
```

FIG. 7

EP 2 226 593 A1

## INTERNATIONAL SEARCH REPORT

| | International application No. |
|---|---|
| | PCT/JP2008/003300 |

A. CLASSIFICATION OF SUBJECT MATTER
*F25B1/00*(2006.01)i, *F25B41/06*(2006.01)i

According to International Patent Classification (IPC) or to both national classification and IPC

B. FIELDS SEARCHED

Minimum documentation searched (classification system followed by classification symbols)
F25B1/00, F25B41/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-159893 A (Mitsubishi Electric Corp.), 15 June, 1999 (15.06.99), Par. Nos. [0031] to [0032], [0057] (Family: none) | 1,4,6-10,12, 13 |
| Y | JP 2001-201213 A (Denso Corp.), 27 July, 2001 (27.07.01), Par. No. [0037] & US 6505476 B1 & DE 10053203 A1 | 1,4,6-10,12, 13 |
| Y | JP 9-236367 A (LG Electronics Inc.), 09 September, 1997 (09.09.97), Par. No. [0022] & US 5783925 A & DE 19704132 A1 | 1,4,6-10,12, 13 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 January, 2009 (16.01.09) | 27 January, 2009 (27.01.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/003300

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2007/029802 A1 (Daikin Industries, Ltd.), 15 March, 2007 (15.03.07), Par. No. [0049]; Fig. 4 & JP 2007-71504 A & EP 1923647 A1 | 2,3 |
| Y | JP 5-118670 A (Sanyo Electric Co., Ltd.), 14 May, 1993 (14.05.93), Par. No. [0006]; Fig. 2 (Family: none) | 11 |

Form PCT/ISA/210 (continuation of second sheet) (April 2007)

**EP 2 226 593 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07225058 B